# EUROPÄISCHE PATENTSCHRIFT

(11) **EP 0 864 299 B1**
(45) Veröffentlichungstag und Bekanntmachung des Hinweises auf die Patenterteilung: **22.09.2004**
(21) Anmeldenummer: 97810135.0
(22) Anmeldetag: 10.03.1997
(51) Int. Cl.: A61C 8/00

(54) **Dentale oder implantologische Dosiervorrichtung**
Device for use with dental implants for applying medicament
Dispositif de dosage pour implant dentaire

(43) Veröffentlichungstag der Anmeldung: 16.09.1998
(73) Patentinhaber: Hämmerle, Christoph, Prof. Dr., 80280 Zürich (CH)
(72) Erfinder: Hämmerle, Christoph, 3636 Forst (CH); Lang, Nikolaus, 3043 Uettligen (CH)
(74) Vertreter: BOVARD AG - Patentanwälte

(56) Entgegenhaltungen:
- EP-A- 0 224 890
- WO-A-84/02264
- DE-A- 4 432 831

## Beschreibung

Die vorliegende Erfindung betrifft eine dentale oder implantologische Dosiervorrichtung zur Verabreichung eines pharmazeutischen Präparates. Sie ist beispielsweise für den Einsatz in Zahnimplantaten während dem Einwachsen des Implantates bestimmt. Der Hauptzweck ist die Verhinderung von Infektionen während der Einheilung und die Förderung des Gewebewachstums in der Umgebung eines Implantates.

Aus der DE-A-3210242 ist eine nachfüllbare Dosiervorrichtung zur kontinuierlichen Abgabe von Medikamenten bekannt. Diese Dosiervorrichtung ist selbst als Zahnimplantat ausgebildet oder kann die Form einer Brücke aufweisen. Die Dosiervorrichtung kann nachfüllbar ausgestaltet sein. Die Einrichtung in Form einer Brücke kann teilweise lösbar ausgebildet sein.

Weiter ist aus der DE-A-4432831 eine Medizininjektionseinrichtung mit einer künstlichen Zahnwurzel bekannt. Die künstliche Wurzel ist mit einem Durchgang versehen, damit das zu verabreichende Medikament in den Körper eindringen kann. Hierzu kann die künstliche Wurzel mehrere Durchgänge besitzen.

Gemäss den genannten Dokumenten des Standes der Technik werden durch die beschriebenen Vorrichtungen Medikamente während längerer Zeit in den Körper von Patienten eingebracht, ohne dass jedoch eine verbesserte Einheilung von Zahnimplantaten und/oder eine Prävention von Infektionen anvisiert wird.

Auch wird in keinem der genannten Dokumente des Standes der Technik ein Arzneimittelvorratsbehälter temporär an einem Implantat verankert, das zu einem späteren Zeitpunkt als definitive Wurzel eines künstlichen Zahnersatzes dient.

Es ist demzufolge Aufgabe der vorliegenden Erfindung, eine Dosiervorrichtung zur Verfügung zu stellen, welche unmittelbar nach dem Einsatz eines künstlichen Zahnimplantats während der Periode des Einwachsens oder zu andem Zeitpunkten an diesem Implantat temporär verankert werden kann. Sie soll während dem Einheilprozess ein Medikament abgeben, das die Heilung fördert und/oder präventiv gegen Infektionen und andere Komplikationen wirkt.

Es wurde gefunden, dass diese Aufgabe durch die im Patentanspruch 1 definierte Dosiervorrichtung gelöst werden kann.

Nach dem Einsatz von künstlichen Zahnimplantaten besteht während der Einheilphase eine gewisse Infektionsgefahr. Zu deren Vermeidung ist es angebracht, dass in der Umgebung des frisch eingepflanzten Implantats eine Arznei in einer kleinen Dosis abgegeben wird, damit eine Entzündung vermieden werden kann. Auch andere medizinische Gründe, wie z.B. die Förderung oder generelle Beeinflussung des Gewebewachstums, können eine derartige lokale Medikation verlangen. Gemäss der vorliegenden Erfindung wird demzufolge eine Dosiervorrichtung vorgeschlagen, die anstelle einer Einheilkappe auf das Implantat aufgesetzt wird. Während der Einheilphase wird durch die Dosiervorrichtung ein Medikament abgegeben. Die Dosiervorrichtung besteht aus einem biokompatiblen Material, wie aus Metall oder Kunststoff. Sie kann die Form eines Behälters aufweisen oder aber aus einem porösen, wahlweise resorbierbaren Material bestehen, das während einer vorgegebenen Zeitdauer das pharmazeutische Präparat unmittelbar in der Umgebung des Implantates abgibt. Die Dosiervorrichtung hat vorzugweise eine glatte Oberfläche ohne Kanten und weist eine Dimension auf, welche derart ist, dass die Dosiervorrichtung um den Mund des Patienten nicht störend wirkt.

Die Dosiervorrichtung kann so ausgestaltet sein, dass sie im aufgesetzten Zustand das Medikament in der Umgebung der Halspartie der Prothese rund um das Implantat abgeben kann und dort seine Wirkung entfalten kann. Sie kann so ausgebildet sein, dass sie in der Umgebung der Halspartie des Implantates im eingesetzten Zustand Kanäle aufweist, durch welche das pharmazeutische Präparat abgegeben wird. Als pharmazeutische Präparate kommen beispielsweise geeignete Desinfektionsmittel, Antiinfektiva, Antiseptika, Antibiotika, Antiphlogistika, Wachstumsfaktoren und gefässbildende Faktoren in Frage.

Als Mittel zur Aufnahme von pharmazeutischen Präparaten können auch inerte Adsorbentien dienen, welche erforderlichenfalls durch ein Bindemittel in der gewünschten Form gehalten werden. Alternativ kann ein Kern mit einer Schicht aus einem Adsorbens überzogen sein, die mit einem pharmazeutischen Mittel beladen ist und das Adsorbens so ausgewählt ist, dass dieses Mittel im Milieu des Mundes kontinuierlich abgegeben werden kann.

Normalerweise besitzt ein Implantat ein Innengewinde, welches sich in einer Bohrung befindet, die von der künstlichen Wurzel nach aussen gerichtet ist. Während der Einheilphase wird auf diese Bohrung normalerweise eine Einheilkappe aufgeschraubt, bis eine definitive Krone aufgesetzt werden kann. Für die Anwendung der erfindungsgemässen dentalen Dosiervorrichtung können handelsübliche Implantate verwendet werden, beispielsweise Schraubenimplantate oder Hohlzylinderimplantate. Die Dosiervorrichtung weist einen Kupplungsteil auf, der mit einem Gewinde versehen sein kann, welches in das Innengewinde des Implantates passt. Es ist jedoch ebenfalls möglich, dass die Dosiervorrichtung vollständig oder teilweise aus Kunststoff besteht, und aufgrund der elastischen Eigenschaften dieses Materials der Kupplungsteil in das Innengewinde des Implantates hineingesteckt werden kann und durch Friktion verankert wird. Die Dosiervorrichtung kann auch aus einem biologisch abbaubaren Polymer bestehen, aus welchem während dem Abbau das gewünschte Medikament abgegeben wird. Ein derartiges Dosierungsgerät ist vorzugsweise so ausgebildet, dass es sich während der Einheilzeit vollständig abbaut. Die Dauer des Abbaus kann demzufolge so eingestellt werden, dass die Vorrichtung nach der Einheilzeit, die normalerweise vier Monate beträgt, vollständig abgebaut ist. Das Mittel zur Aufnahme und Abgabe einer pharmazeutischen Zusammensetzung der Dosiervorrichtung besteht in der Regel aus einen Hohlraum, der zur Abgabe des Medikamentes mit Mikroöffnungen versehen ist, die unmittelbar in die Umgebung des Zahnfleisches gerichtet sind, wenn die Dosiervorrichtung eingesetzt ist. Sie kann ebenfalls so ausgebildet sein, dass Dosierkanäle unmittelbar am Implantatbett mit dem Zahnfleisch in Kontakt kommen. Die Medikamentabgabe kann somit praktisch direkt im Zahnfleisch vorliegen. Dadurch können lokal entzündungshemmende Mittel und/oder gewebebildende Stoffe abgegeben werden, welche eine schnelle und problemlose Heilung fördern. Vorrichtungen mit einem Hohlraum weisen auch eine Beschickungsöffnung auf, die zum Einbringen einer pharmazeutischen Zusammensetzung dient.

Die Dosiervorrichtung gemäss der vorliegenden Erfindung kann auch auf Implantaten des "immerged" Typs verwendet werden. Solche Implantate heilen nach dem Setzen so ein, dass sie vollständig von der Schleimhaut bedeckt sind und somit keine Kommunikation zur Mundhöhle aufweisen. Demzufolge heilt auch ein solches sich auf einem solchen Implantat befindliches Dosiergerät so ein, dass es unter die Schleimhaut zu liegen kommt. Seine Form muss demzufolge entsprechend angepasst werden.

In einer speziellen Ausführungsform kann die Dosiervorrichtung aus einem faserverstärkten Kunststoff bestehen, der z.B. Carbonfasern enthält. Andere geeignete biokompatible Materialien sind Titan, Titanlegierungen, Chromstahl, Gold oder Zirkon sowie Keramikmaterialien, wie Hydroxylapathit. Die Oberfläche der Vorrichtung ist vorzugsweise poliert.

Die Dosiervorrichtung kann an ihrer Halspartie mit einer Scheibe oder einem Kragen versehen werden. Dadurch wird nicht nur durch dort angeordnete Dosierungsöffnungen eine präzise Dosierung auf die zu verheilende Stelle ermöglicht, sondern die spezielle Form bewirkt, dass diese besser gegen Einflüsse von aussen geschützt ist.

### Kurze Beschreibung der Zeichnungen

Im Folgenden wird die Erfindung anhand von Beispielen und mit Bezug auf die beiliegenden Zeichnungen näher erläutert, wobei
Fig. 1 eine perspektivische Darstellung eines ersten Beispiels eines erfindungsgemässen Dosiergerätes darstellt,
Fig. 2 ein zweites Beispiel eines erfindungsgemässen Dosiergerätes darstellt,
Fig. 3 ein drittes Beispiel eines erfindungsgemässen Dosiergerätes darstellt,
Fig. 4 ein viertes Beispiel eines erfindungsgemässen Dosiergerätes darstellt,
Fig. 4a ein analoges Dosiergerät wie in Fig. 4 zeigt, das jedoch mit einem andern Kupplungsteil versehen ist,
Fig. 5 ein Beispiel eines handelsüblichen Implantats darstellt, in welchem die erfindungsgemässen Dosiergeräte zum Einsatz kommen,
Fig. 5a ein Beispiel eines handelsüblichen Implantats des "submerged" Typs darstellt, in welchem ebenfalls erfindungsgemässe Dosiergeräte zum Einsatz kommen können,
Fig. 6 bzw. 6a alternative Formen von kommerziell erhältlichen Implantaten darstellen, in welchen die erfindungsgemässen Dosiergeräte zum Einsatz gelangen und
Fig. 7 bzw. 7a Schnitte durch Kieferknochen darstellen, in welchen Implantate eingesetzt sind, auf welche erfindungsgemässe Dosiergeräte eingesetzt sind.

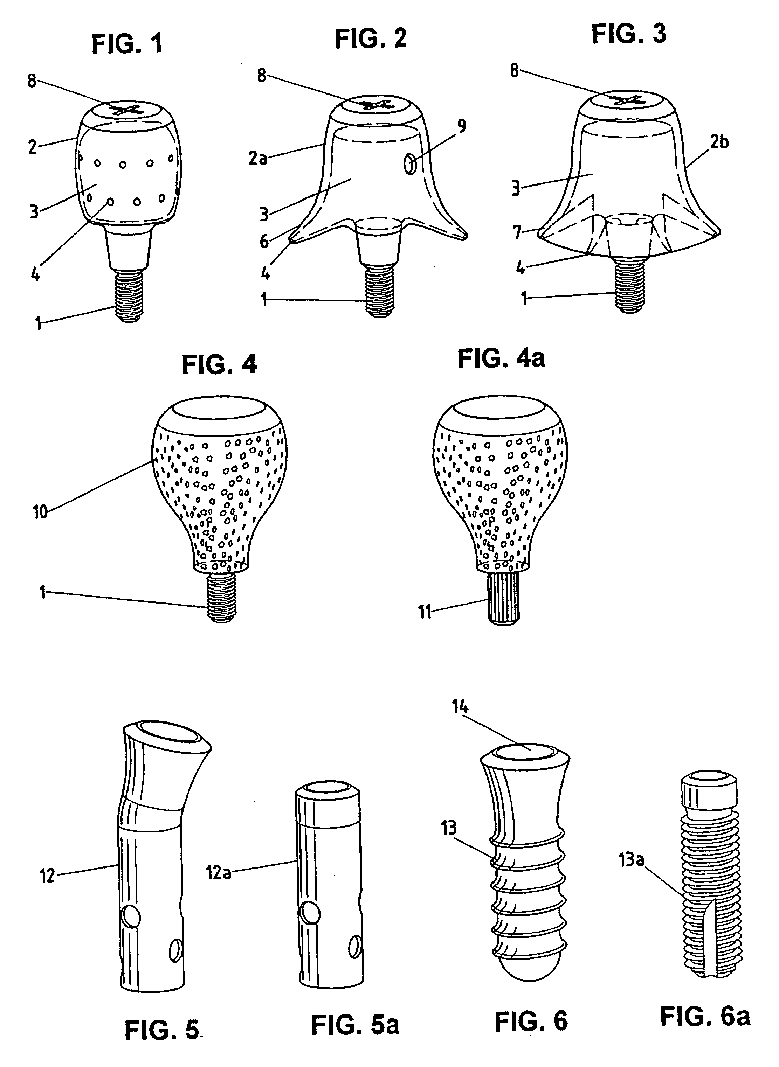

Figur 1 zeigt eine erste Ausführungsform eines erfindungsgemässen Dosiergerätes 2, welches ein Kupplungsteil mit einem Schraubengewinde 1 aufweist, das zur Befestigung in einem handelsüblichen Implantat (z.B. gemäss Fig. 4 oder 5) bestimmt ist. Im Innem des Dosiergerätes befindet sich ein Hohlraum 3 für die Aufnahme einer pharmazeutischen Zusammensetzung, vorzugsweise als Flüssigkeit oder in Form eines Gels. Zur Abgabe der pharmazeutischen Zusammensetzung befinden sich an der Aussenwand Dosieröffnungen 4, durch welche die Zusammensetzung langsam austreten kann. Die Öffnungen können, je nach Bedarf, an verschiedenen Stellen und in verschiedener Anzahl angeordnet sein. Zum Einsetzen der Dosiervorrichtung in ein Implantat ist auf der oberen Seite eine Vertiefung 8 vorgesehen, welche zum Eingreifen eines Werkzeuges wie einer Schraubenziehers dient.

Figur 2 zeigt eine erste Ausführungsform eines erfindungsgemässen Dosiergerätes 2a, welches analoge Merkmale wie die Ausführungsform gemäss Figur 1 aufweist. Die Dosieröffnungen befinden sich jedoch hier nicht an der Seitenwand des Dosiergerätes 2, sondern es sind dafür spezielle Fortsätze 6 vorgesehen, an deren Enden sich Austrittsöffnungen 4 für den Austritt eines Medikamentes befinden. Die Fortsätze sind derart ausgestaltet, dass sie, wenn die Dosiervorrichtung in ein Implantat eingesetzt ist, in die zu behandelnde Umgebung eingreifen. In dieser Ausführungsform ist ebenfalls eine seitliche Beschickungsöffnung 9 vorgesehen, welche durch eine Verschluss-Schraube geöffnet und verschlossen werden kann. Die Öffnung dient zum Einbringen eines Medikamentenpräparates. Ein derartiges Dosiergerät kann mehrmals verwendet werden, sofern es aus einem sterilisierbaren Material wie Gold, Titan oder Chromstahl besteht.

Figur 3 zeigt eine dritte Ausführungsform eines erfindungsgemässen oralen Dosiergerätes 2b. Die Merkmale, mit den gleichen Bezugszeichen wie in den vorher diskutierten Figuren, haben die gleiche Bedeutung. In der dargestellten Ausführungsform weist das Dosiergerät einen Kragen 7 auf, an welchem sich Dosieröffnungen 4 für den Austritt einer Medikamentenzusammensetzung befinden. Der Kragen hat die Aufgabe, das Gewebe in der Umgebung des lmplantats abzudecken und ihm gleichzeitig eine Medikamentenlösung, wie ein Desinfektionsmittel oder einen Wirkstoff, welche die Gewebebildung fördert, zuzuführen.

Figur 4 zeigt eine vierte Ausführungsform eines erfindungsgemässen Dosiergerätes, nämlich eine Dosiervorrichtung 10 aus einem biokompatiblen Kunststoff. Der Kunststoff ist hier porös ausgebildet und besitzt eine schwammartige Struktur, welche zur Aufnahme einer Medikamentenzusammensetzung dient. Die Vorrichtung ist dazu bestimmt, dass sie während dem Einheilungsprozess des lmplantats kontinuierlich eine vorbestimmte Menge eines Arzneimittels abgibt. Diese Ausführungsform kann aus einem biologisch abbaubaren Polymer bestehen, wobei gleichzeitig mit dem Abbau des Polymers der Wirkstoff freigesetzt wird. Das Polymer ist auf solche Weise ausgestaltet, dass es innerhalb der Ausheilungszeit ohne Rückstand abgebaut ist. Die Befestigung einer derartigen abbaubaren Dosiervorrichtung geschieht mittels eines Kupplungsteils mit Schraubengewinde.

Die in Fig. 4a dargestellte Ausführungsform entspricht derjenigen nach Figur 4. Im Gegensatz dazu weist sie einen Kupplungsteil 11 auf, der mit Längsrippen versehen ist und der Befestigung durch Friktion dient. Er wird in das Innengewinde eines lmplantats 12, 12a, 13 oder 13a (Fig.5. 5a, 6, 6a) ohne Schraubbewegung eingesetzt.

Figur 5 zeigt ein handelsübliches Implantat 12 vom Zylindertyp, in welchem sich Perforationen befinden. Die erfindungsgemässen Dosiervorrichtungen sind so ausgestaltet, dass sie in das in der Öffnung vorhandene Gewinde passen.

Figur 5a zeigt ein analoges handelsübliches Implantat 12a, vom "submerged" Typ, welches beim Einheilen vollständig bedeckt ist. Die erfindungsgemässe Dosiervorrichtung ist hier auch so ausgestaltet, dass sie ebenfalls von der Schleimhaut bedeckt ist.

Figur 6 zeigt eine weitere Ausführungsform eines handelsüblichen Implantats 13, welches zur Befestigung in Kieferknochen ein Aussengewinde besitzt. In der Bohrung 14 befindet sich ein Innengewinde, welches zur Befestigung einer Einheilungskappe und schliesslich zur Befestigung einer Zahnprothese dient. Diese Öffnung 14 dient intermediär während der Einheilphase ebenfalls zum Einfügen einer oralen Medikamenten-Dosiervorrichtung gemäss der vorliegenden Erfindung.

Figur 6a zeigt eine analoge Ausführungsform eines handelsüblichen Implantats 13a, jedoch vom "submerged" Typ.

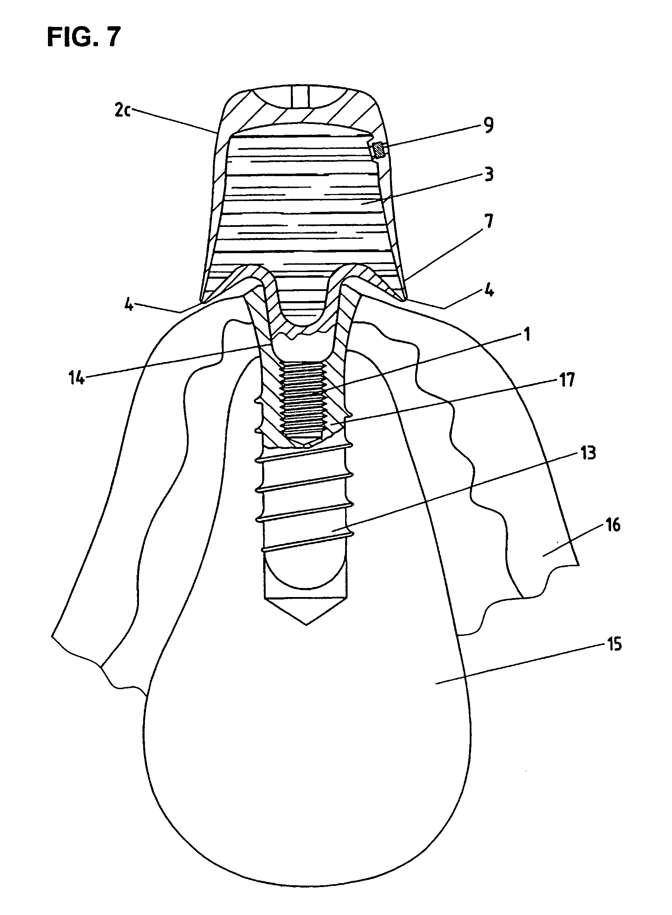

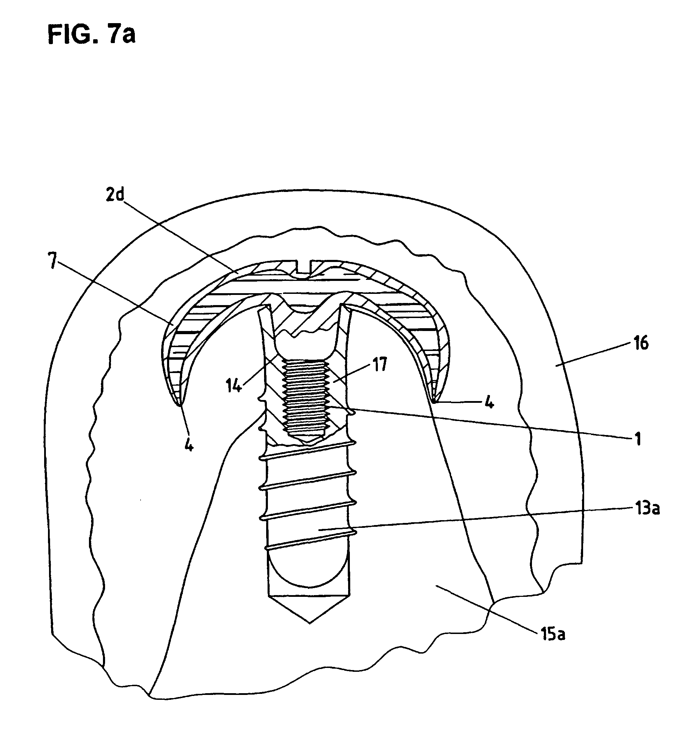

Figur 7 zeigt einen Schnitt durch einen Kieferknochen 15, in welchem ein Implantat 13 eingesetzt ist. In der Bohrung 14 mit einem Innengewinde 17 ist eine Dosiervorrichtung 2c mit dem Gewinde 1 des Kupplungsteils eingeschraubt. Die Dosiervorrichtung weist ein Vorratsgefäss 3 für eine Medikamentenlösung sowie einen Kragen 7 auf, welcher die Stelle abdeckt, an welcher das Implantat 13 mit dem Gewebematerial 16 in Kontakt kommt. Der Kragen 7 weist Kanäle auf, welche in Austrittsöffnungen 4 münden und zur Abgabe eines pharmazeutischen Präparates rund um das Implantat dienen. Dadurch wird eine Entzündung des Gewebes in der Umgebung des Implantats vermieden und die Heilung kann durch entsprechende Präparate, welche die Bildung von Gewebe fördern, beschleunigt werden. Schliesslich ist noch die Nachfüllöffnung 9 dargestellt.

Figur 7a zeigt einen analogen Schnitt durch einen defekten Kieferknochen 15a, in welchem ein "submerged" Implantat 13a eingesetzt ist. In der Bohrung 14 mit einem Innengewinde 17 ist eine Dosiervorrichtung 2d mit dem Gewinde 1 des Kupplungsteils eingeschraubt. Die Dosiervorrichtung weist ein flaches Dosiergefäss für eine Medikamentenlösung mit einem Kragen 7 auf, welcher Kanäle aufweist, die in Austrittsöffnungen 4 münden und zur Abgabe eines pharmazeutischen Präparates dienen. Das Dosiergefäss erfüllte seine Funktion unter der Schleimhaut, wobei keine Verbindung zur Mundhöhle besteht.

Durch die erfindungsgemässe Dosiervorrichtung für die Anwendung auf neu eingesetzten Implantaten wird in erster Linie das Risiko einer Entzündung vermindert, wodurch die Einheilung des Implantates problemlos verläuft. Die Vorrichtung erlaubt auch das Erreichen anderer medizinischer Ziele im Bereich der Zahnmedizin, wie z.B. die Beeinflussung des Gewebewachstums.

Die Operationen zum Einsetzen der Implantate erfolgt in konventioneller Weise, so dass die erfindungsgemässen Dosiervorrichtungen eine wertvolle Ergänzung von Bewährtem darstellen. Nach der Heilungsphase wird wie bisher ein Aufbaupfeiler in das Implantat eingesetzt, auf welchem dann, gemäss dem Stand der Technik, eine Krone aufgesetzt wird.

## Patentansprüche

1. Orale Dosiervorrichtung (2, 2a-2d) für die Abgabe einer pharmazeutischen Zusammensetzung zur Verhinderung von Infektionen und zur Förderung des Gewebewachstums während dem Einheilprozess eines als definitive Wurzel eines künstlichen Zahnersatzes dienendes Zahnimplantats (12, 12a, 13, 13a), nach dessen Einsatz, **gekennzeichnet durch** ein Mittel (3, 4, 10) zur Aufnahme der pharmazeutischen Zusammensetzung und deren Abgabe unmittelbar in seiner Umgebung, und einen Kupplungsteil (1, 11) zur temporären Befestigung der Dosiervorrichtung 2, 2a - 2d) auf dem Zahnimplantat (12, 12a, 13, 13a),
(a) das genannte Mittel mindestens einen Hohlraum (3) zur Aufnahme der pharmazeutischen Zusammensetzung und zu deren direkten Abgabe, Dosieröffnungen (4) aufweist, wobei die Dosieröffnungen so ausgestaltet und angeordnet sind, dass die Abgabe der pharmazeutischen Zusammensetzung in der Umgebung der Halspartie des Implantats erfolgen kann, oder
(b) das genannte Mittel aus einem biologisch abbaubaren Polymer besteht, welches die pharmazeutische Zusammensetzung **durch** biologischen Abbau abgibt, oder
(c) das genannte Mittel ein Adsorbens enthält, welches mit der pharmazeutischen Zusammensetzung beladen werden kann und diese im dentalen Milieu kontinuierlich abgeben kann.

2. Dosiervorrichtung nach Anspruch 1, **dadurch gekennzeichnet, dass** das Mittel zur Aufnahme und Abgabe der pharmazeutischen Zusammensetzung einen Hohlraum (3) und als Dosierungsöffnungen (4), Kanäle, Mikroöffnungen oder Poren, für die Abgabe der pharmazeutischen Zusammensetzung umfasst.

3. Dosiervorrichtung nach Anspruch 1 oder 2, **dadurch gekennzeichnet, dass** Dosierungsöffnungen (4) für die pharmazeutische Zusammensetzung an einer Seitenwand der Dosiervorrichtung (2, 2a - 2d) angeordnet sind.

4. Dosiervorrichtung nach Anspruch 3, **dadurch gekennzeichnet, dass** sie Fortsätze (7) aufweist, an deren Ende sich die Dosierungsöffnungen (4) für eine pharmazeutische Zusammensetzung befinden, wobei die genannten Fortsätze in solcher Weise ausgerichtet sind, dass die Medikamentenabgabe an die gewünschten Positionen gerichtet ist.

5. Dosiervorrichtung nach einem der Ansprüche 1 bis 3, **dadurch gekennzeichnet, dass** sie einen Kragen aufweist, welcher das Kupplungsteil (1, 11) für den Einsatz in das Implantat umgibt.

6. Dosiervorrichtung nach Anspruch 1, **dadurch gekennzeichnet, dass** sie aus einem Polymer besteht.

7. Dosiervorrichtung nach Anspruch 6, **dadurch gekennzeichnet, dass** das Polymer porös ist und die Hohlräume in diesem Polymer zur Aufnahme einer pharmazeutischen Zusammensetzung dienen.

8. Dosiervorrichtung nach Anspruch 6 oder 7, **dadurch gekennzeichnet, dass** das Polymer biologisch abbaubar ist.

9. Dosiervorrichtung nach Anspruch 1, **dadurch gekennzeichnet, dass** das Mittel zur Aufnahme und Abgabe einer pharmazeutischen Zusammensetzung aus einem inerten Kern und einer Beschichtung mit einem Adsorbens besteht, wobei das Adsorbens mit einer pharmazeutische Zusammensetzung beladen werden kann und es diese im dentalen Milieu kontinuierlich abgeben kann.

10. Dosiervorrichtung nach einem der Ansprüche 1 bis 9, **dadurch gekennzeichnet, dass** sie in solcher Weise ausgestaltet ist, dass das Eingreifen eines Werkzeuges möglich ist, das für das Einsetzen in das Implantat oder zur Entfernung dient.

11. Dosiervorrichtung nach einem der Ansprüche 1 bis 10, **dadurch gekennzeichnet, dass** das Kupplungsteil ein Schraubengewinde aufweist, welches an das entsprechende Innengewinde eines Implantates angepasst ist.

12. Dosiervorrichtung nach einem der Ansprüche 1 bis 10, **dadurch gekennzeichnet, dass** das Kupplungsteil für die Befestigung im Implantat ein mit Längsrippen versehener Zylinder ist, welcher eine Befestigung durch Friktion ermöglicht.

13. Dosiervorrichtung nach einem der Ansprüche 1 bis 12, **dadurch gekennzeichnet, dass** sie für die Verwendung mit einem Implantat des "submerged" Typs angepasst ist.

## Claims

1. Oral dosing device (2, 2a-2d) for delivery of a pharmaceutical composition for prevention of infections and for promotion of tissue growth during the settling process of a dental implant (12, 12a, 13, 13a) serving as the definitive root of an artificial dental prosthesis, after insertion thereof, **characterised by** a means (3, 4, 10) for receiving the pharmaceutical composition and its delivery immediately in its vicinity, and a coupling portion (1, 11) for temporary attachment of the dosing device (2, 2a-2d) on the dental implant (12, 12a, 13, 13a),
(a) said means has at least one cavity (3) for receiving the pharmaceutical composition and for its direct delivery, dosing apertures (4), the dosing apertures being designed and disposed such that the delivery of the pharmaceutical composition can take place in the vicinity of the neck portion of the implant, or
(b) said means consists of a biodegradable polymer, which delivers the pharmaceutical composition through biological degradation, or
(c) said means contains an adsorbent which can be loaded with the pharmaceutical composition and can deliver this composition continuously in the dental milieu.

2. Dosing device according to claim 1, **characterised in that** the means for receiving and delivering the pharmaceutical composition comprise a cavity and as dosing apertures (4) channels, micro-apertures or pores, for the delivery of the pharmaceutical composition.

3. Dosing device according to claim 1 or 2, **characterised in that** dosing apertures (4) for the pharmaceutical composition are disposed on a sidewall of the dosing device (2, 2a-2d).

4. Dosing device according to claim 3, **characterised in that** it includes extensions (7), at the ends of which the dosing apertures (4) for a pharmaceutical composition are situated, said extensions being aligned in such a way that the medicament delivery is directed to the desired positions.

5. Dosing device according to one of the claims 1 to 3, **characterised in that** it comprises a collar surrounding the coupling portion (1, 11) for insertion of the implant.

6. Dosing device according to claim 1, **characterised in that** it is made of a polymer.

7. Dosing device according to claim 6, **characterised in that** the polymer is porous, and the cavities in this polymer serve to receive a pharmaceutical composition.

8. Dosing device according to claim 6 or 7, **characterised in that** the polymer is biodegradable.

9. Dosing device according to claim 1, **characterised in that** the means for receiving and delivering a pharmaceutical composition comprises an inert core and a coating of an adsorbent, the adsorbent being capable of being loaded with a pharmaceutical composition and of delivering the pharmaceutical composition continuously in the dental milieu.

10. Dosing device according to one of the claims 1 to 9, **characterised in that** it is designed in such a way that the insertion of a tool is possible, which tool serves for insertion into or removal from the implant.

11. Dosing device according to one of the claims 1 to 10, **characterised in that** the coupling portion includes a screw thread adapted to the respective internal thread of an implant

12. Dosing device according to one of the claims 1 to 10, **characterised in that** the coupling portion for securing in the implant is a cylinder provided with longitudinal ribs enabling a securing through friction.

13. Dosing device according to one of the claims 1 to 12, **characterised in that** it is adapted for use with an implant of the "submerged" type.

## Revendications

1. Dispositif de dosage oral (2, 2a-2d) pour la délivrance d'une composition pharmaceutique pour empêcher les infections et pour la favorisation de la croissance tissulaire pendant le processus de guérison d'un implant dentaire (12, 12a, 13, 13a) servant de racine définitive à une prothèse dentaire après son emploi, **caractérisé par** un moyen (3, 4, 10) pour la réception de la composition pharmaceutique et sa délivrance directement dans son environnement et une partie d'accouplement (1, 11) pour une fixation temporaire du dispositif de dosage (2, 2a-2d) sur l'implant dentaire (12, 12a, 13, 13a),
(a) en ce que ledit moyen présente au moins une cavité (3) pour la réception de la composition pharmaceutique et des ouvertures de dosage (4) pour sa délivrance directe, les ouvertures de dosage étant équipées et disposées de manière que la délivrance de la composition pharmaceutique puisse s'effectuer dans l'environnement de la partie du col de l'implant, ou
(b) en ce que ledit moyen se compose d'un polymère biologiquement dégradable, qui délivre la composition pharmaceutique par dégradation biologique, ou
(c) en ce que ledit moyen contient un adsorbant solide lequel peut être chargé de la composition pharmaceutique et peut la délivrer en continu en milieu dentaire.

2. Dispositif de dosage selon la revendication 1, **caractérisé en ce que** le moyen pour la réception et la délivrance de la composition pharmaceutique comprend une cavité (3) et en tant qu'orifice de dosage (4), des canaux, des micro-orifices ou des pores pour la délivrance de la composition pharmaceutique.

3. Dispositif de dosage selon la revendication 1 ou 2, **caractérisé en ce que** des ouvertures de dosage (4) pour la composition pharmaceutique sont disposées sur une paroi latérale du dispositif de dosage (2, 2a-2d).

4. Dispositif de dosage selon la revendication 3, **caractérisé en ce qu'**il présente des prolongements (7) aux extrémités desquelles se trouvent les orifices de dosage (4) pour une composition pharmaceutique, lesdits prolongements étant orientés de sorte que la délivrance de médicament est orientée en fonction des positions souhaitées.

5. Dispositif de dosage selon l'une des revendications 1 à 3, **caractérisé en ce qu'**il présente un collet qui entoure la partie d'accouplement (1, 11) pour l'insertion dans l'implant.

6. Dispositif de dosage selon la revendication 1, **caractérisé en ce qu'**il se compose d'un polymère.

7. Dispositif de dosage selon la revendication 6, **caractérisé en ce que** le polymère est poreux et les cavités dans ce polymère servent à recevoir une composition pharmaceutique.

8. Dispositif de dosage selon la revendication 6 ou 7, **caractérisé en ce que** le polymère est biodégradable.

9. Dispositif de dosage selon la revendication 1, **caractérisé en ce que** le moyen pour la réception d'une composition pharmaceutique se compose d'un noyau inerte et d'un revêtement d'un absorbant solide, l'absorbant pouvant être chargé d'une composition pharmaceutique et il peut la délivrer en milieu dentaire.

10. Dispositif de dosage selon l'une des revendications 1 à 3, **caractérisé en ce qu'**il est muni de telle manière que l'intervention d'un outil est possible, lequel sert à l'insertion dans l'implant ou au retrait de ce dernier.

11. Dispositif de dosage selon l'une des revendications 1 à 10, **caractérisé en ce que** la partie d'accouplement présente un filetage vissé, qui est adapté au filetage interne correspondant d'un implant.

12. Dispositif de dosage selon l'une des revendications 1 à 10, **caractérisé en ce que** la partie d'accouplement pour la fixation dans l'implant est un cylindre qui est muni de nervures longitudinales qui permet une fixation par friction.

13. Dispositif de dosage selon l'une des revendications 1 à 12, **caractérisé en ce qu'**il est adapté pour l'utilisation d'un implant du type "submergé".
